# EUROPEAN PATENT SPECIFICATION

(11) **EP 3 379 608 B1**
(45) Date of publication and mention of the grant of the patent: **22.04.2020**
(21) Application number: 17162583.3
(22) Date of filing: 23.03.2017
(51) Int. Cl.: H01M 2/20, H01M 10/48, H01M 2/10, H01M 10/42

(54) **CONNECTION ASSEMBLY FOR A TRACTION BATTERY IN PARTICULAR FOR ELECTRIC VEHICLES**
ANSCHLUSSMONTAGE FÜR EINE TRAKTIONSBATTERIE INSBESONDERE FÜR ELEKTRISCHE FAHRZEUGE
ENSEMBLE DE CONNEXION POUR UNE BATTERIE DE TRACTION EN PARTICULIER POUR VEHICULES ÉLECTRIQUES

(43) Date of publication of application: 26.09.2018
(73) Proprietor: TE Connectivity Germany GmbH, 64625 Bensheim (DE)
(72) Inventor: KIOSCHIS, Kai, 76829 Landau (DE); TOTH, Gerzson, 68307 Mannheim (DE)
(74) Representative: Grünecker Patent- und Rechtsanwälte PartG mbB

(56) References cited:
- EP-A1- 2 546 906
- DE-A1-102012 205 019
- US-A1- 2011 076 521
- US-A1- 2012 231 638

## Description

The invention relates to a connection assembly for a traction battery in particular for electric vehicles.

Such a connection assembly can comprise at least one busbar and at least one flexible electrical connection element, wherein the busbar and the flexible electrical connection element extend along each other in an overall extension direction.

The busbar can serve to connect some cells of the traction battery for increasing the current and/or the voltage. The flexible electrical connection element can be used for monitoring the voltages at certain positions of the connection assembly for example for monitoring voltages at certain cells to check the integrity of the cells.

A disadvantage associated with the current solution is that a relative movement between cells which can for example be due to mechanical forces acting during operation or due to thermal expansion can lead to a loss of electrical contact.

In order to provide a solution that allows for relative movements without losing electrical contact, the busbar can comprise at least one compensation section in which the busbar extends sideways away from the extension direction.

This solution has the advantage that relative movements do not lead to a loss of the contact but rather elastically deform the competition section. The locations of the contacts remain force free.

The flexible electrical connection element can also comprise a compensation section. This helps to reduce the effect of relative movements for the flexible electrical connection element as well.

DE10 2012 205 019 shows a cell contact system having a power line system with cell connectors that are provided for performing electrical conductive connection of cell terminals of various electrochemical cells, wherein a signal conductor of signal line system is connected partially by a material bond to a carrier element. In US 2011076521, a first bus bar connects first electrodes of a first cell unit and second electrodes of a second cell unit in a first line, and a second bus bar connects the second electrodes of the first cell unit and the first electrodes of a third cell unit in a second line. In EP 2 546 906, a battery module includes a plurality of connecting members electrically connecting electric terminals and of adjacent electric cells, and a flexible flat cable formed by flatly encapsulating an outer circumference of a flat conductor with an insulating resin and joining the plurality of connecting members, wherein portions of the flexible flat cable to be disposed between adjacent connecting members are provided with folded portions formed by folding the flexible flat cable at folded lines and the folded lines extend in a direction crossing a longitudinal direction of the flexible flat cable.

The object of the invention is to provide a solution that saves space.

The object is achieved when the compensation section of the bus bar is located within the compensation section of the flexible electrical connection element, wherein the compensation section of the flexible electrical connection element defines an area that it surrounds and the compensation section of the busbar is located in the area surrounded by the compensation section of the flexible electrical connection element.

The inventive solution can be improved by the following further improvements and advantageous embodiments, which are advantageous on their own and can be combined arbitrarily as desired.

In an advantageous embodiment, at least one of the compensation sections extends away from the traction battery. Thereby, safe operation of the connection assembly can be achieved.

For example, the compensation section of the flexible electrical connection element can define an area that it surrounds and the compensation section of the busbar can be located in the area surrounded by the compensation section of the flexible electrical connection element. Of course, an inverted arrangement is possible, meaning that the compensation section of the flexible electrical connection element is located within the compensation section of the busbar.

The connection assembly can comprise a compensation section comprising the compensation section of the busbar and the compensation section of the flexible electrical connection element. Due to this compensation section of the connection assembly, relative movements do not have an effect on the connection assembly.

In a compact arrangement, the compensation section of the busbar and the compensation section of the flexible electrical connection element can be next to each other. The busbar and the flexible electrical connection element can run at least partially parallel to each other. They can be adjacent to each other or in direct vicinity to each other. No further elements can be located between the busbar and the flexible electrical connection element.

In order to allow a relative movement of the busbar relative to the flexible electrical connection element, the compensation section of the busbar and the compensation section of the flexible electrical connection element can be spaced from each other in a direction perpendicular to a plane of the busbar. They can be spaced apart from each other in a direction perpendicular to the overall extension direction and/or in a direction pointing away from a surface of the traction battery.

A solid design still allowing a relative movement is in particular possible when the busbar and the flexible electrical connection element are separated at the compensation sections and connected to each other outside the compensation section.

In a particularly simple configuration, the connection assembly comprises at least three separate busbars that are spaced from each other at two gap sections and at least one compensation section is located between the two gap sections. The compensation section can thus be located outside a gap section between two busbars.

To increase the stability, the flexible electrical connection element can bridge a gap between two busbars. It can extend continuously through the gap section and over the gap.

In an advantageous embodiment, at least one compensation section comprises at least one curve. Such a configuration is easy to produce and allows a relative movement without the risk of damages due to material fatigue at sharp-edged sections. In particular, the compensation section can have a continuous curvature from one end to another end.

In order to achieve a good performance, the compensation section can comprise one 180 degree curve and two 90 degree curves. The compensation section can have a U-shape, wherein U-shape within the meaning of this text also comprise omega-shapes or C-shapes. A U-shape can in particular have two legs and a connecting section connecting the two legs.

The 180 degree curve can be located between the two 90 degree curves to achieve a simple and symmetric design.

In an alternative embodiment, the compensation section can have other shapes. For example, the compensation section can comprise two legs that are at 60 degrees to each other and at 120 degrees to other sections of the busbar and/of the flexible electrical connection element.

Further, the compensation section can have sharp edged sections or corners that allow a hinged movement of the two legs next to the sharp edge or corner.

In order to allow a compact configuration, the busbar and the flexible electrical connection element each can have a substantially rectangular cross-section with flat sides facing each other. One flat side can lie on and parallel to a surface of the traction battery.

The flexible electrical connection element can be a flexible flat cable (FFC) so that manufacturing is simple.

In order to allow good compensation, it is advantageous when at the compensation section at least one of the busbar and/or the flexible electrical connection element turns away from the overall extension direction perpendicular to the flat side.

In an advantageous embodiment, the connection assembly comprises a push-down element for pushing down and/or fixing a straight section of the flexible electrical connection element. An undesired movement of the flexible electrical connection element or the busbar is thus avoided.

The push-down element can in particular be located at a gap section to keep the flat flexible electrical connection element and the busbar close to the traction battery at this section.

In the following, the inventive solutions will be explained in more detail and with reference to the drawings. The features shown in the further developments and advantageous embodiments can be combined as desired and are advantageous on their own.

In the Figures:
- Fig. 1: shows a schematic perspective view of a connection assembly;
- Fig. 2: shows the connection assembly of Fig. 1 also comprising a push down element; and
- Fig 3: shows a schematic drawing of a further embodiment of a connection assembly.

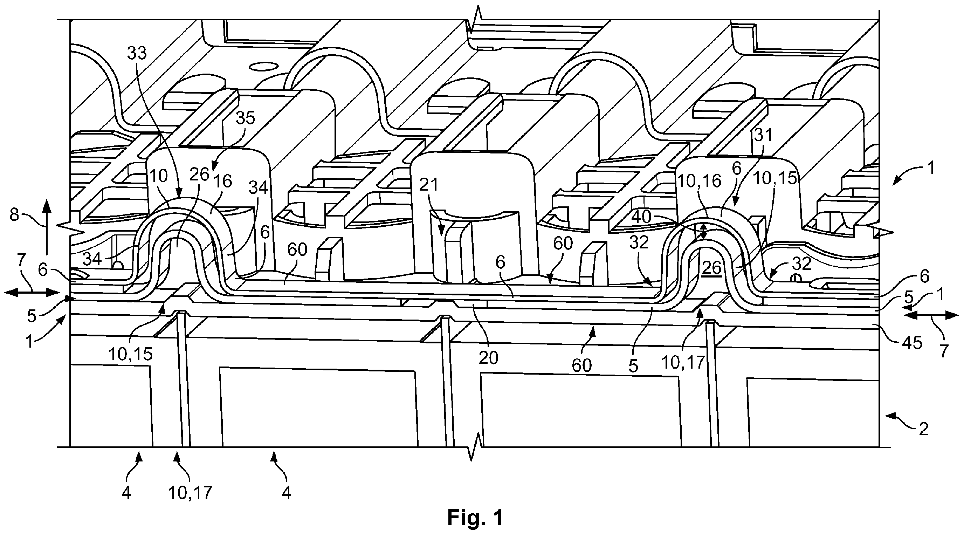

In Fig. 1, a connection assembly 1 is shown. The connection assembly 1 comprises several busbars 5 and a flexible electrical connection element 6.

The busbars 5 can serve to connect poles of cells 4 of the traction battery 2 which can for example be part of an electric vehicle. The busbars 5 can connect the poles in parallel or in series to achieve an increase of the voltage or the current.

Below the busbars 5, a cover 45 is arranged.

The busbars 5, the flexible electrical connection element 6 and the cover 45 extend in a general or overall extension direction 7 which is parallel to a surface of the traction battery 2.

The cells 4 are subjected to relative movement for example due to mechanical stress or movement during the operation of the vehicle. Further, the busbars 5 expand when a current running through them increases their temperature.

In order to avoid that such a relative movement damages the connection between the busbars 5 and the cells 4, the busbars 5 comprise compensation sections 10, 15 in which the busbar 5 extends sideways away from the extension direction 7. The busbars 5 in particular extend along a direction 8 that is perpendicular to the extension direction 7 at the compensation section 10, 15 away from the overall extension direction 7.

The flexible electrical connection element 6 also comprises a compensation section 10, 16 in which the flexible connection electrical connection element 6 extends sideways away from the extension direction 7.

The busbars 5 are made from flat sheet metal and the compensation sections 10, 15 have been introduced by bending the sheet metal.

The flexible electrical connection element 6 is a flexible flat cable (FFC) that comprises an insulating body and several conductors located in the insulating body, wherein the conductors are connected at different points of the electrical connection assembly 1 to cells 4 to monitor the voltage at the different locations.

The busbar 5 and the flexible electrical connection element 6 both have a rectangular cross-section with flat sides 60 which face each other. A further flat side 60 of the busbar 5 faces the cover 45 in order to have a good support. A further flat side 60 of the flexible electrical connection element 6 faces away from the traction battery 2.

The compensation section 10, 16 of the flexible electrical connection element 6 defines an area 26 in which the compensation section 10, 15 of the busbar 5 is located. Hence, the compensation section 10, 15 of the busbar 5 is located within the compensation section 10, 16 of the flexible electrical connection element 6. Both compensation sections 10, 15, 16 are part of a compensation section 10, 17 of the connection assembly 1. At this compensation section 10, 17, both compensation sections 10, 15, 16 of the busbar 5 and the flexible electrical connection element 6 extend away in the same direction 8 from the extension direction 7 of the connection assembly 1. The two compensation sections 10, 15, 16 are nested within each other. In a non-depicted inverted embodiment, the compensation section 10, 16 of the flexible electrical connection element 6 can be located within the compensation section 10, 15 of the busbar 5.

The compensation section 10, 15 of the busbar 5 and the compensation section 10, 16 of the flexible electrical connection element 6 are located next to each other. Outside the compensation section 10, 15, 16, the busbars 5 and the flexible electrical condensation connection element 6 lie in an abutting manner next to each other and are attached to each other. At the compensation sections 10, 15, 16, a spacing exists between the two. The busbars 5 and the flexible electrical connection element 6 are separated at the compensation sections 10, 15, 16 and are connected to each other outside the compensation section 10, 15, 16.

The compensation section 10, 15 of the busbar 5 and the compensation section 10, 16 of the flexible electrical connection element are spaced from each other in the direction 8 perpendicular to a plane of the busbar 5 and perpendicular to the extension direction 7 to allow a relative movement of the two. At a central location, the two compensation sections 10, 15, 16 are spaced at a distance 40 from each other.

In Fig 1, two compensation sections 10, 17 of the connection assembly 1 are shown. Each of them is located outside a gap section 21 at which a gap 20 exists between two busbars 5. Thus, each of the connection assembly compensation sections 10, 17 is located between two gap sections 21.

At the gap section 21, the flexible electrical connection element 6 bridges the gap 20. The flexible electrical connection element 61 hence runs through the gap section 21 in a continuous and straight manner.

Each of the compensation sections 10, 15, 16 of the busbar 5 and the flexible electrical connection element 6 comprises at least one curve 30. More particularly, each compensation section 10, 15, 16 comprises a 180° curve 31 located between two 90° curves 32. Thus, each of the compensation sections 10, 15, 16 has a U-shape 33 in which a connection section 35 is located between two legs 34.

At the compensation sections 10, 15, 16, the busbar 5 and the flexible electrical connection element 6 turn away from the overall extension direction 7 perpendicular to the flat side 60 of the busbar 5 and the flexible electrical connection element 6.

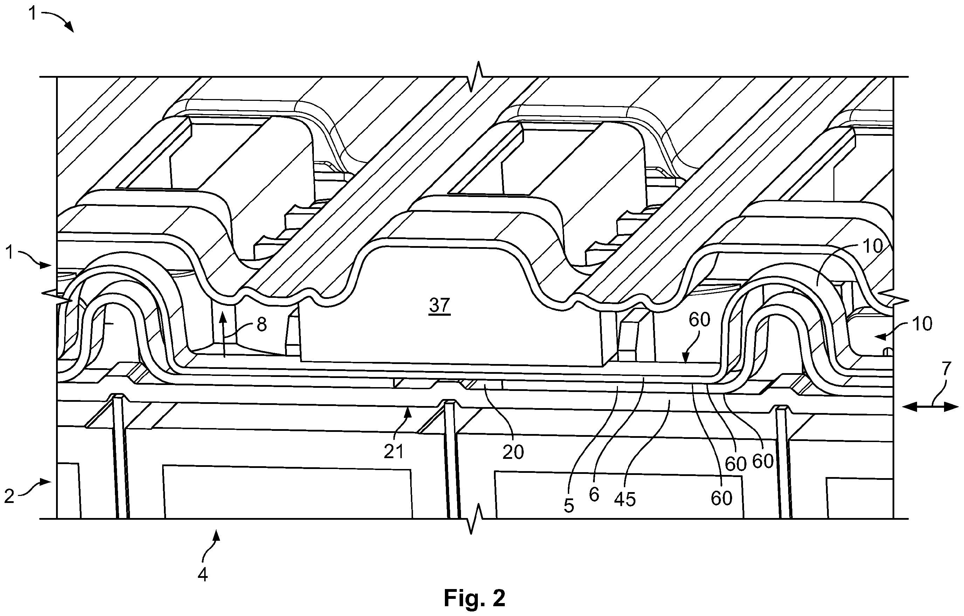

In Fig 2, the connection assembly 1 further comprises a push-down element 37 which pushes down the flexible electrical connection element 6 and the busbars 5 in particular at a gap section 21. This helps to fix the connection assembly 1 to the traction battery 2.

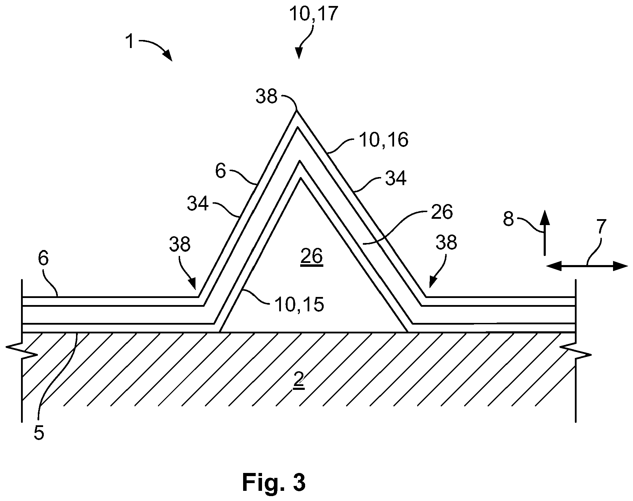

In Fig 3, a further embodiment of a connection assembly 1 is shown in a schematic drawing. The compensation sections 10, 15, 16 shown therein comprise straight sections instead of the curved versions shown in the embodiment of Figs 1 and 2. Each compensation section 10, 15, 16 has two legs 34 that are connected to each other at a 60° angle. These legs 34 are at an angle of 120° to further sections of the busbar 5 or the flexible electrical connection element 6.

A compensating movement is thus possible through a hinged movement at the corners 38 of the compensation sections 10, 15, 16.

As before, the two compensation sections 10, 15, 16 are spaced apart from each other in a direction 8 perpendicular to an extension direction 7 of the connection assembly 1.

### REFERENCE NUMERALS

- 1: connection assembly
- 2: traction battery
- 4: cell
- 5: busbar
- 6: flexible electrical connection element
- 7: extension direction
- 8: direction perpendicular to extension direction
- 10: compensation section
- 15: compensation section of the busbar
- 16: compensation section of the flexible electrical connection element
- 17: compensation section of the connection assembly
- 20: gap
- 21: gap section
- 26: area
- 30: curve
- 31: 180° curve
- 32: 90° curve
- 33: U-shape
- 34: leg
- 35: connection section
- 37: push-down element
- 38: corner
- 40: distance
- 45: cover
- 60: flat side

## Claims

1. Connection assembly (1) for a traction battery (2) in particular for electric vehicles, comprising at least one busbar (5) and at least one flexible electrical connection element (6), wherein the busbar (5) and the flexible electrical connection element (6) extend along each other in an overall extension direction (7), wherein the busbar (5) comprises at least one compensation section (10, 15) in which the busbar (5) extends sideways away from the extension direction (7), wherein the flexible electrical connection element (6) comprises a compensation section (10, 16), **characterized in that** the compensation section (10, 15) of the busbar (5) is located within the compensation section (10, 16) of the flexible electrical connection element (6), wherein the compensation section (10, 16) of the flexible electrical connection element (6) defines an area that it surrounds and the compensation section (10, 15) of the busbar (5) is located in the area surrounded by the compensation section (10, 16) of the flexible electrical connection element (6).

2. Connection assembly (1) according to one of claim 1, wherein the compensation section (10, 15) of the busbar (5) and the compensation section (10, 16) of the flexible electrical connection element (6) are spaced from each other in a direction (8) perpendicular to a plane of the busbar (5).

3. Connection assembly (1) according to one of claims 1 to 2, wherein the busbar (5) and the flexible electrical connection element (6) are separated at the compensation sections (10, 15, 16, 17) and connected to each other outside the compensation sections (10, 15, 16, 17).

4. Connection assembly (1) according to one of claims 1 to 3, wherein the connection assembly (1) comprises at least three separate busbars (5) that are spaced from each other at two gap sections (21) and wherein the compensation section (10, 15, 16, 17) is located between the two gap sections (21).

5. Connection assembly (1) according to one of claims 1 to 4, wherein the flexible electrical connection element (6) bridges a gap (20) between two busbars (5).

6. Connection assembly (1) according to one of claims 1 to 5, wherein the compensation section (10, 15, 16, 17) comprises at least one curve (30).

7. Connection assembly (1) according to one of claims 1 to 6, wherein the compensation section (10, 15, 16, 17) comprises one 180 degree curve (31) and two 90 degree curves (32).

8. Connection assembly (1) according to one of claims 1 to 7, wherein the busbar (5) and the flexible electrical connection element (6) each have a rectangular cross-section with flat sides (60) facing each other.

9. Connection assembly (1) according to one of claims 1 to 8, wherein at the compensation section (10, 15, 16, 17) at least one of the busbar (5) or the flexible electrical connection element (6) turns away from the overall extension direction (7) perpendicular to a flat side (60).

10. Connection assembly (1) according to one of claims 1 to 9, wherein the connection assembly (1) comprises a push-down element (37) for pushing down and/or fixing a straight section of the flexible electrical connection element (6).

11. Connection assembly (1) according to one of claims 4 to 10, wherein the push-down element is located at a gap section (21).

## Patentansprüche

1. Verbindungsanordnung (1) für eine Antriebsbatterie (2), insbesondere für Elektrofahrzeuge, die wenigstens eine Sammelschiene (5) und wenigstens ein flexibles elektrisches Verbindungselement (6) umfasst, wobei sich die Sammelschiene (5) und das flexible elektrische Verbindungselement (6) in einer Gesamt-Ausdehnungsrichtung (7) aneinander entlang erstrecken, die Sammelschiene (5) wenigstens einen Ausgleichs-Abschnitt (10, 15) umfasst, in dem sich die Sammelschiene (5) seitlich von der Ausdehnungsrichtung (7) weg erstreckt, und das flexible elektrische Verbindungselement (6) einen Ausgleichs-Abschnitt (10, 16) umfasst, **dadurch gekennzeichnet, dass** der Ausgleichs-Abschnitt (10, 15) der Sammelschiene (5) innerhalb des Ausgleichs-Abschnitts (10, 16) des flexiblen elektrischen Verbindungselementes (6) angeordnet ist, der Ausgleichs-Abschnitt (10, 16) des flexiblen elektrischen Verbindungselementes (6) einen Bereich bildet, der von ihm umschlossen ist, und sich der Ausgleichs-Abschnitt (10, 15) der Sammelschiene (5) in dem von dem Ausgleichs-Abschnitt (10, 16) des flexiblen elektrischen Verbindungselementes (6) umschlossenen Bereich befindet.

2. Verbindungsanordnung (1) nach Anspruch 1, wobei der Ausgleichs-Abschnitt (10, 15) der Sammelschiene (5) und der Ausgleichs-Abschnitt (10, 16) des flexiblen elektrischen Verbindungselementes (6) in einer Richtung (8) senkrecht zu einer Ebene der Sammelschiene (5) voneinander beabstandet sind.

3. Verbindungsanordnung (1) nach einem der Ansprüche 1 bis 2, wobei die Sammelschiene (5) und das flexible elektrische Verbindungselement (6) an den Ausgleichs-Abschnitten (10, 15, 16, 17) getrennt und außerhalb der Ausgleichs-Abschnitte (10, 15, 16, 17) miteinander verbunden sind.

4. Verbindungsanordnung (1) nach einem der Ansprüche 1 bis 3, wobei die Verbindungsanordnung (1) wenigstens drei separate Sammelschienen(5) umfasst, die an zwei Zwischenraum-Abschnitten (21) voneinander beabstandet sind, und der Ausgleichs-Abschnitt (10, 15, 16, 17) zwischen den zwei Zwischenraum-Abschnitten (21) angeordnet ist.

5. Verbindungsanordnung (1) nach einem der Ansprüche 1 bis 4, wobei das flexible elektrische Verbindungselement (6) einen Zwischenraum (20) zwischen zwei Sammelschienen (5) überbrückt.

6. Verbindungsanordnung (1) nach einem der Ansprüche 1 bis 5, wobei der VerbindungsAbschnitt (10, 15,16, 17) wenigstens eine Krümmung (30) umfasst.

7. Verbindungsanordnung (1) nach einem der Ansprüche 1 bis 6, wobei der Ausgleichs-Abschnitt (10, 15, 16, 17) eine Krümmung (31) um 180° und zwei Krümmungen (32) um 90° umfasst.

8. Verbindungsanordnung (1) nach einem der Ansprüche 1 bis 7, wobei die Sammelschiene (5) und das flexible elektrische Verbindungselement (6) jeweils einen rechteckigen Querschnitt mit einander zugewandten flachen Seiten (60) haben.

9. Verbindungsanordnung (1) nach einem der Ansprüche 1 bis 8, wobei an dem Ausgleichs-Abschnitt (10, 15, 16, 17) sich die Sammelschiene (5) oder/und das flexible elektrische Verbindungselement (6) senkrecht zu einer flachen Seite (60) von der Gesamt-Ausdehnungsrichtung (7) weg krümmt/krümmen.

10. Verbindungsanordnung (1) nach einem der Ansprüche 1 bis 9, wobei die Verbindungsanordnung (1) ein Niederdrück-Element (37) zum Niederdrücken und/oder Fixieren eines geraden Abschnitts des flexiblen elektrischen Verbindungselementes (6) umfasst.

11. Verbindungsanordnung (1) nach einem der Ansprüche 4 bis 10, wobei sich das Niederdrück-Element an einem Zwischenraum-Abschnitt (21) befindet.

## Revendications

1. Ensemble de connexion (1) pour une batterie de traction (2), en particulier pour des véhicules électriques, comprenant au moins une barre de distribution (5) et au moins un élément de connexion électrique souple (6), la barre de distribution (5) et l'élément de connexion électrique souple (6) s'étendant le long l'un de l'autre dans une direction globale d'extension (7), la barre de distribution (5) comprenant au moins une section de compensation (10, 15) dans laquelle la barre de distribution (5) s'étend latéralement à distance de la direction d'extension (7), l'élément de connexion électrique souple (6) comprenant une section de compensation (10, 16), **caractérisé en ce que** la section de compensation (10, 15) de la barre de distribution (5) est située à l'intérieur de la section de compensation (10, 16) de l'élément de connexion électrique souple (6), la section de compensation (10, 16) de l'élément de connexion électrique souple (6) définissant une zone qu'elle entoure, et la section de compensation (10, 15) de la barre de distribution (5) étant située dans la zone entourée par la section de compensation (10, 16) de l'élément de connexion électrique souple (6).

2. Ensemble de connexion (1) selon la revendication 1, dans lequel la section de compensation (10, 15) de la barre de distribution (5) et la section de compensation (10, 16) de l'élément de connexion électrique souple (6) sont espacées l'une de l'autre dans une direction (8) perpendiculaire au plan de la barre de distribution (5).

3. Ensemble de connexion (1) selon l'une des revendications 1 et 2, dans lequel la barre de distribution (5) et l'élément de connexion électrique souple (6) sont séparés au niveau des sections de compensation (10, 15, 16, 17) et raccordés l'un à l'autre à l'extérieur des sections de compensation (10, 15, 16, 17).

4. Ensemble de connexion (1) selon l'une des revendications 1 à 3, l'ensemble de connexion (1) comprenant au moins trois barres de distribution (5) séparées qui sont espacées l'une de l'autre au niveau de deux sections formant intervalle (21), et où la section de compensation (10, 15, 16, 17) est située entre les deux sections formant intervalle (21) .

5. Ensemble de connexion (1) selon l'une des revendications 1 à 4, dans lequel l'élément de connexion électrique souple (6) ponte l'intervalle (20) entre deux barres de distribution (5).

6. Ensemble de connexion (1) selon l'une des revendications 1 à 5, dans lequel la section de compensation (10, 15, 16, 17) comprend au moins une courbe (30).

7. Ensemble de connexion (1) selon l'une des revendications 1 à 6, dans lequel la section de compensation (10, 15, 16, 17) comprend une courbe à 180 degrés (31) et deux courbes à 90 degrés (32).

8. Ensemble de connexion (1) selon l'une des revendications 1 à 7, dans lequel la barre de distribution (5) et l'élément de connexion électrique souple (6) présentent chacun une section transversale rectangulaire comportant des flancs plats (60) se faisant face.

9. Ensemble de connexion (1) selon l'une des revendications 1 à 8, dans lequel, au niveau de la section de compensation (10, 15, 16, 17), au moins l'un de la barre de distribution (5) ou de l'élément de connexion électrique souple (6) tourne à distance de la direction globale d'extension (7) perpendiculairement à un flanc plat (60).

10. Ensemble de connexion (1) selon l'une des revendications 1 à 9, l'ensemble de connexion (1) comprenant un élément de poussée vers le bas (37) destiné à pousser vers le bas et/ou à immobiliser une section droite de l'élément de connexion électrique souple (6).

11. Ensemble de connexion (1) selon l'une des revendications 4 à 10, dans lequel l'élément de poussée vers le bas est situé au niveau d'une section formant intervalle (21) .
